# FASCICULE DE BREVET EUROPEEN

(11) **EP 1 184 423 B1**
(45) Date de publication et mention de la délivrance du brevet: **07.06.2006**
(21) Numéro de dépôt: 01402266.9
(22) Date de dépôt: 30.08.2001
(51) Int. Cl.: C08L 95/00

(54) **Emulsions aqueuses de bitume synthétique, leur procédé de préparation et leurs applications**
Wässrige Emulsionen aus synthetischem Bitumen, Verfahren zu deren Herstellung und ihre Verwendungen
Synthetic bitumen aqueous emulsions, preparation process and applications thereof

(30) Priorité: 30.08.2000 FR 0011069
(43) Date de publication de la demande: 06.03.2002
(73) Titulaire: TotalFinaElf France, 92800 Puteaux (FR)
(72) Inventeur: Lemoine, Guy, 76600 Le Havre (FR); Gillet, Jean-Philippe, 76700 Gainneville (FR); Jolivet, Yannick, 76600 Le Havre (FR)
(74) Mandataire: Jolly, Jean-Pierre

(56) Documents cités:
- DD-A- 149 373
- DE-A- 3 830 679
- US-A- 4 172 821
- US-A- 5 414 029

## Description

La présente invention concerne de nouvelles émulsions aqueuses de bitume synthétique, qui sont constituées essentiellement de liants synthétiques clairs ne contenant pas d'asphaltènes, et de polymères, ainsi que leur procédé de préparation. L'invention concerne aussi les applications de ces émulsions pour la réalisation de revêtements de surface pouvant être colorés, notamment pour des matériaux d'étanchéité pigmentés, tels que les chapes d'étanchéité colorées pour toitures, ainsi que pour des utilisations routières.

Il est connu, dans l'état de la technique, d'utiliser des liants synthétiques clairs, ayant, à l'exception de la couleur, des caractéristiques voisines de celles des bitumes naturels (provenant du pétrole brut, des schistes bitumineux, d'huiles lourdes, de sables bitumineux, etc..., obtenus notamment par distillation et désasphaltage de la fraction lourde issue de la distillation), dans la fabrication de revêtements colorés. Ces liants clairs ne contiennent pas d'asphaltènes et peuvent être obtenus notamment, comme décrit dans le brevet européen EP 179 510, par mélange d'un extrait d'huile lubrifiante minérale et d'une résine de pétrole et/ou d'une résine coumarone-indène modifiées. Ils sont utilisés pour réaliser des compositions pigmentables, en mélange avec des pigments colorés et éventuellement d'autres polymères. Leur mise en oeuvre se fait par des techniques à chaud, compliquées et coûteuses en énergie.

Il est également connu de mettre en émulsion des bitumes naturels, de façon à pouvoir les utiliser dans les techniques dites « à froid » des applications routières.

Par ailleurs, on sait également réaliser des émulsions aqueuses de liants synthétiques clairs, avec des granulats et des pigments colorés, pour la réalisation d'enrobés colorés destinés à des revêtements routiers ou urbains, dont la mise en oeuvre est réalisée à froid. Cependant, si, pour d'autres applications, on souhaite augmenter les performances du liant, notamment sa cohésivité et/ou son point de ramollissement (ou température « bille-anneau »), par l'adjonction de polymères, le taux de polymère se trouve rapidement limité à un seuil d'environ 7% en poids. Cette limite provient de la viscosité élevée des liants modifiés obtenus, qui rend leur mise en émulsion très difficile, voire impossible, dans les conditions de température et de pression habituelles mises en oeuvre dans les procédés de fabrication.

C'est le cas en particulier dans le brevet européen EP 0 604 258, appartenant à la Demanderesse, qui décrit un exemple d'obtention d'une émulsion aqueuse bitume-polymère, dans laquelle le bitume peut être un bitume synthétique, auquel est ajouté un polymère, qui est greffé et réticulé in situ à chaud dans le bitume. Le taux de polymère dans l'émulsion ne dépasse pas 5% en poids et le procédé de préparation nécessite une mise en oeuvre relativement complexe.

La Demanderesse a établi que, de façon surprenante, par la mise en émulsion d'un liant synthétique clair en combinaison avec au moins un composé de la famille des latex, on peut obtenir une émulsion améliorée de bitume synthétique, particulièrement avantageuse grâce à sa teneur spécialement élevée en polymères, tout en conservant une viscosité satisfaisante, qui facilite sa mise en oeuvre, en particulier pour les applications par des techniques dites « à froid ».Cette émulsion est particulièrement avantageuse pour la réalisation de revêtements ou couches de surface, en particulier colorés, et elle confère à ces revêtements des caractéristiques accrues, grâce au taux élevé de polymère qui peut être incorporé, en particulier en ce qui concerne leur point de ramollissement, leur cohésion, leur résistance au vieillissement, ainsi qu'un comportement rhéologique amélioré. émulsion de bitume synthétique, utilisable notamment pour la réalisation de revêtements colorés, constituée essentiellement (a) de liants synthétiques exempts d'asphaltènes, et éventuellement (b) de pigments colorés, caractérisée en ce qu'elle comprend :
- au moins un liant synthétique, exempt d'asphaltènes, ayant un point de ramollissement ou une température Bille-Anneau (TBA), mesurée selon la norme NF T 66-008, comprise entre 30 et 100 °C, comprenant au moins un agent structurant à base de résine de pétrole et au moins un agent plastifiant à base d'un extrait aromatique d'une coupe pétrolière, ou comprenant au moins un agent structurant à base d'un polymère hydrocarboné cycloaliphatique et au moins un agent plastifiant à base d'un composé hydrocarboné aliphatique dont le nombre d'atomes de carbone est supérieur ou égal à 20,
- au moins un composé de la famille des latex de polymères acryliques et de caoutchoucs naturels ou synthétiques, introduit en une quantité comprise entre 3 et 40 % en poids de l'émulsion,
- de l'eau,
- et au moins un agent émulsifiant.

Plus particulièrement, le composé de la famille des latex est choisi parmi les polymères acryliques ou les caoutchoucs naturels ou synthétiques, utilisables sous forme de dispersion aqueuse, tels que:
- l'EPDM (éthylène-propylène-diène-monomère),
- l'EPM (éthylène-propylène monomère),
- les copolymères styrène-butadiène statistiques S.B.R. (styrène-butadiène rubber) ou séquencés S.B.S. (styrène-butadiène-styrène), linéaires ou étoilés, ou S.I.S. (styrène-isoprène-styrène),
- le polyisobutylène,
- le polybutadiène,
- le polyisoprène,
- le polychloroprène.

De préférence, le composé de la famille des latex est introduit en une quantité comprise entre 5 et 30 % en poids de l'émulsion.

Le liant synthétique clair comprend au moins un agent plastifiant à base d'un extrait aromatique d'une coupe pétrolière et au moins un agent structurant à base de résine de pétrole, ou comprend au moins un agent plastifiant à base d'un composé hydrocarboné aliphatique dont le nombre d'atomes de carbone est supérieur ou égal à 20, et au moins un agent structurant à base d'un polymère hydrocarboné cycloaliphatique.

L'agent plastifiant utilisé dans le cadre de l'invention, est choisi de préférence parmi :
a) les huiles aliphatiques naturelles ou synthétiques,
b) les polymères à bas degré de polymérisation, tels que les polyoléfines.

En particulier, les huiles aliphatiques ont un point d'aniline supérieur ou égal à 90°C (selon la méthode ASTM D 611) et, de préférence, supérieur ou égal à 110 °C.

Ces huiles aliphatiques sont choisies de préférence, parmi les huiles blanches hydrogénées, contenant au moins 60% d'atomes de carbone paraffinique (selon la méthode ASTM D 2140).

Les polymères constituant l'agent plastifiant ont un indice de viscosité (VI) (selon la méthode ASTM D 2270) supérieur ou égal à 100, et de préférence supérieur ou égal à 120.

De préférence, ces polymères sont du type polybutène, de masse moléculaire en nombre comprise entre 900 et 2600 et de viscosité cinématique à 100°C (selon la méthode ASTM D 445) comprise entre 200 et 4600 cSt (200 à 4600 mm²/s).

L'agent structurant conforme à l'invention est une résine thermoplastique polycycloaliphatique, en particulier du type des polycyclopentanes, à faible masse moléculaire.

Plus particulièrement, la résine thermoplastique du type des polycyclopentanes, a un point de ramollissement (ou Température Bille-Anneau, TBA, mesurée selon la norme NF T 66-008) supérieur à 125 °C, et un indice de couleur Gardner (selon la norme NF T 20-030) d'au plus 1

Le rapport en poids entre l'agent structurant et l'agent plastifiant, selon l'invention, est avantageusement compris entre 0,4 et 1,5.

Selon l'invention, l'agent plastifiant est utilisé en une quantité comprise entre 40 et 70 % en poids du liant synthétique clair.

Le liant synthétique clair, tel que défini ci-dessus, présente une pénétrabilité comprise entre 20 et 300 dixièmes de mm (selon la norme NF T 66-004).

Le liant synthétique clair de l'émulsion selon l'invention peut contenir, en outre, soit des copolymères du type éthylène-acétate de vinyle (EVA) ou styrène-butadiène séquencés S.B.S., soit des polymères du type du polyéthylène basse densité. L'incorporation de ces polymères s'avère utile pour durcir le liant, diminuer les valeurs de pénétrabilité, et renforcer la cohésion.

Pour réaliser l'émulsion selon l'invention, la Demanderesse a utilisé ainsi avec succès une émulsion de latex de polychloroprène, non ionique ou cationique, ayant une concentration en matière sèche de 55 à 59 % et une masse spécifique comprise entre 1,09 et 1,14 g/cm³.

L'émulsion selon l'invention peut comprendre, de préférence :
- de 40 à 70% en masse de liant synthétique,
- de 5 à 30 % en masse de latex,
- de 60 à 30 % en masse d'eau,
- de 3 à 10 % en masse d'agent émulsifiant.

La préparation de l'émulsion selon l'invention nécessite l'utilisation d'un émulsifiant, qui est de préférence cationique ou non ionique. Une gamme d'émulsifiants préférés comprend, par exemple, des émulsifiants à base d'alcools secondaires éthoxylés en C10 à C15, introduits à un taux compris entre 3 et 8 % en masse de la solution émulsifiante. D'autres émulsifiants, tels que les alcools polyvinyliques, peuvent aussi être utilisés avantageusement.

L'incorporation de l'émulsifiant peut se faire en partie au préalable dans le liant synthétique, avant l'introduction de la solution émulsifiante pour la mise en émulsion du bitume, qui est réalisée dans un mélangeur à très haut taux de cisaillement.

L'invention a également pour objet un procédé de préparation de cette émulsion, caractérisé en ce qu'il comprend les étapes suivantes :
a) la réalisation d'un liant synthétique, par mélange sous forme sensiblement homogène, à l'état fondu, d'au moins un agent plastifiant et d'au moins un agent structurant,
b) la mise en émulsion du liant synthétique obtenu en a) à l'aide d'une solution aqueuse d'un agent émulsifiant, en maintenant le mélange obtenu à une température suffisante pour obtenir une émulsion stable,
c) le refroidissement de l'émulsion et l'incorporation du latex sous forme d'émulsion, sous agitation à température ambiante.

La première étape a) du procédé de préparation de l'émulsion de bitume synthétique selon l'invention consiste à mélanger les composants du liant synthétique à une température qui peut être comprise entre 180 et 200 °C, dans une enceinte de mélange dynamique avec rotor, pendant une durée qui peut être de 1 à 1,5 heure, pour obtenir un mélange homogène.

La deuxième étape b) du procédé selon l'invention comporte l'incorporation au liant synthétique, sous agitation, d'une solution émulsifiante réalisée avec un émulsifiant non ionique ou cationique, introduit à un taux compris entre 3 et 8 % en masse de la solution émulsifiante. Cette mise en émulsion est réalisée au moyen d'un mélangeur à forte agitation. L'émulsion obtenue présente un taux de matière sèche compris entre 30 et 75 %.

Après refroidissement de l'émulsion a lieu l'incorporation de l'émulsion de latex, de préférence sous forme non ionique ou cationique, qui est introduite à un taux compris avantageusement entre environ 15 et 30% en masse, par mélange mécanique à température ambiante. On constate une bonne stabilité de l'émulsion bitume/polymère obtenue, dont le taux de matière sèche varie entre 56 et 60 %.

Il peut être également envisagé d'incorporer le polymère sous forme de latex, lors de la mise en émulsion du liant synthétique, en l'ajoutant au système émulsifiant à l'étape b).

Dans une autre variante de mise en oeuvre du procédé selon l'invention, le liant synthétique est obtenu par mélange d'un agent plastifiant se composant d'un composé hydrocarboné aliphatique, dont le nombre d'atomes de carbone est supérieur ou égal à 20, et d'un agent structurant composé d'un polymère hydrocarboné cycloaliphatique.

L'émulsion finale peut comporter aussi des pigments colorés, introduits sous forme d'émulsions. On n'observe pas de rupture de l'émulsion finale lors de cette introduction et, pour obtenir une certaine opacité, il peut être nécessaire d'ajouter d'autres pigments, comme par exemple du dioxyde de titane. La dispersion des colorants se fait par agitation mécanique.

La rupture de l'émulsion conforme à l'invention peut se produire, lorsque l'on utilise un émulsifiant non ionique, par évaporation de l'eau à la température ambiante ou par chauffage, notamment par air chaud ou par micro-ondes.

Dans le cas de l'utilisation d'un émulsifiant cationique, la rupture de l'émulsion se fait par un processus chimique (assisté par la présence de granulats).

La couche de bitume synthétique obtenue par évaporation de l'eau à partir de cette émulsion présente une température bille-anneau (TBA) supérieure à 100°C et qui peut dépasser 160°C, alors qu'avant mise en émulsion, le liant synthétique clair a une TBA inférieure à 50°C.

Compte tenu de la viscosité élevée de cette composition, de ses propriétés adhésives et de sa bonne stabilité à la lumière, cette émulsion est particulièrement bien adaptée à une utilisation comme revêtement en remplacement de certains revêtements polymériques tels que des plastisols de polychlorure de vinyle, des émulsions de polymères ou des peintures.

Un autre objet de l'invention consiste en l'application d'une telle émulsion à la réalisation d'un revêtement de surface coloré sur un matériau d'étanchéité, tel qu'une membrane ou chape, composé d'au moins une couche de base, cette application étant caractérisée en ce que le dépôt du bitume synthétique, auquel sont ajoutés des pigments colorés, est obtenu par enduction de cette émulsion sur la couche de base et évaporation de son eau.

La couche de revêtement de surface présente une température bille-anneau (TBA) supérieure à 160°C et une épaisseur inférieure à 1 mm et de préférence inférieure à 500 µm.

On constate qu'une telle couche de surface présente une tenue à la lumière comparable à celle de certains revêtements polymériques tels que des plastisols de polychlorure de vinyl (PVC).

Le matériau d'étanchéité à traiter comporte de préférence une couche support à base d'un mélange bitume-polymère.

Un autre objet de l'invention consiste en l'application d'une émulsion selon l'invention à la réalisation d'un revêtement de surface coloré pour applications routières à froid, tel que des enduits superficiels, des enrobés coulés à froid, et des coulis, sur une couche de base, cette application étant caractérisée en ce que le dépôt du liant synthétique, auquel sont ajoutés des pigments colorés et des granulats, est obtenu par répandage à froid et rupture de cette émulsion.

La couche de revêtement de surface ainsi obtenue, peut présenter une épaisseur inférieure à 1,5 cm et de préférence inférieure ou égale à 0,8 cm. Elle possède des propriétés améliorées d'adhésion à la couche de base, ainsi que de cohésion .

Des émulsions cationiques adaptées à la nature des granulats sont avantageusement utilisées pour le répandage ou l'enrobage. Ces émulsions présentent une teneur en liant comprise entre environ 60 et 70 % en poids.

De façon générale, on constate que les caractéristiques du liant synthétique de base auquel est ajouté un latex, selon l'invention, sont nettement améliorées, en particulier en ce qui concerne sa cohésivité, son adhésivité passive, son comportement à basse température (Point de Fraass inférieur à -20°C), sa TBA, son intervalle de plasticité, sa résistance au vieillissement, et son comportement rhéologique.

L'Exemple suivant, qui n'a pas de caractère limitatif, illustre un mode préféré de mise en oeuvre de l'invention.

### Exemple

Cet exemple concerne la préparation d'une émulsion de bitume synthétique selon l'invention.

### 1) Préparation du liant synthétique clair:

Le liant synthétique utilisé comprend :
- 59,5% en poids, comme agent plastifiant, d'un polybutène de masse moléculaire en nombre de 2600 et de viscosité cinématique à 100°C (selon la méthode ASTM D 445) de 4300 cSt (ou mm²/s), vendu sous la marque « Dynapak H-2000 » par la société Pakhoed, et
- 40,5 % en poids, comme agent structurant, d'une résine hydrocarbonée cyclo-aliphatique saturée, ayant un point de ramollissement ou température bille-anneau (TBA) de 140 °C, une masse moléculaire en nombre de 400, et un indice de couleur Gardner (selon la norme NF T 20-030) de 1, vendue sous la marque « Escorez 5340 » par la société Exxon.

Le rapport en poids entre l'agent structurant (résine) et l'agent plastifiant est dans ce cas de 0,68.

La préparation du mélange s'effectue avec un mélangeur Rayneri, à 180°C, pendant environ 1,5 heure, jusqu'à l'obtention d'un mélange homogène.

Le liant synthétique obtenu présente les caractéristiques suivantes :
- pénétrabilité à 25°C en 1/10 mm (selon norme NF T 66-004) : 165,
- température bille-anneau en °C (selon norme NF T 66-008) : 41.

### 2) Préparation de l'émulsion de liant synthétique :

On incorpore l'émulsifiant dans le liant synthétique à un taux d'environ 8% en masse, en utilisant comme émulsifiant un alcool secondaire en C13 à C15 éthoxylé, du type non-ionique, vendu sous la marque « Tergitol 15S 9 » par la société Union Carbide, sous agitation avec un mélangeur Rayneri, pendant 30 mn, à une température de 160°C.

Par ailleurs, on prépare une solution émulsifiante à 8% de « Tergitol 15S9 » dans de l'eau, à une température de 60°C, et cette solution émulsifiante est ensuite introduite dans le bitume pour la mise en émulsion, qui s'effectue dans un ultramélangeur du type « Ultra Turrax », avec une durée de cisaillement de 5 mn (petite et grande vitesse) ;

Le refroidissement de l'émulsion est réalisé ensuite avec un mélangeur Rayneri.

La composition de l'émulsion est la suivante, en % en poids:
- bitume synthétique : 52,
- agent émulsifiant « Tergitol » : 8,
- eau : 40,
et son taux de matière sèche est d'environ 60 %.

### 3) Préparation de l'émulsion liant synthétique-latex :

On incorpore dans l'émulsion précédente 30 % en masse d'un latex de polychloroprène en émulsion aqueuse cationique, ayant une teneur en matière sèche de 56%, de densité 1,12 g/cm³ et de pH égal à 2,1. L'homogénéisation est réalisée par agitation mécanique à température ambiante.

L'émulsion obtenue est stable, présente un taux de matière sèche à 140°C de 56,3% et un diamètre moyen des particules de 14,3µm.

### 4) Essais de coloration :

A 100 parties de l'émulsion précédente sont ajoutées 3 parties d'un pigment azoïque jaune en émulsion et 5 parties d'un pigment blanc de dioxyde de titane.

Un deuxième essai est réalisé avec un pigment vert (phtalocyanine de cuivre) introduit dans les mêmes proportions que le pigment jaune.

La dispersion des colorants se fait par agitation mécanique manuelle.

### 5) Essais sur chape d'étanchéité :

La rupture de l'émulsion s'effectue par évaporation à l'air libre. L'épaisseur du liant coloré est d'environ 200µm.

La valeur de sa TBA est supérieure à 160°C et la couche obtenue a donc des caractéristiques mécaniques nettement améliorées.

### 6) Tenue à la lumière.

Les revêtements obtenus ont été soumis à un test de vieillissement en étuve avec une lampe fournissant une lumière artificielle reproduisant la lumière du jour (puissance de la lampe :528W/m²), à 35 °C pendant 250 et 450 heures. Ce test simule le comportement des matériaux après mise en oeuvre et application.

L'évaluation de la couleur des échantillons à l'aide d'un chromamètre Minolta CR-300, a donné les résultats apparaissant dans le Tableau 1 ci-après (dans lequel "Liant synt." signifie : "Liant synthétique").

**Tableau 1**

| Test de Vieillissement | échantillon | ΔE (Ecart de couleur) | ΔL (Ecart de clarté) | Δa vert→rouge | Δb bleu→ jaune |
|---|---|---|---|---|---|
| Lumière du jour 250 h | Liant synt./ latex jaune | + 15,04 | -2,52 | +1,92 | -14,7 |
| Lumière du jour 450 h | Liant synt./ latex jaune | +25,18 | -4,63 | +3,3 | -24,53 |
| Lumière du jour 250 h | Liant synt./ latex vert | + 19,96 | -9,98 | +16,86 | +3,79 |
| Lumière du jour 450 h | Liant synt./ latex vert | +22,76 | -11,84 | +19,1 | +3,61 |

La stabilité à la lumière des mélanges liant synthétique /polychloroprène selon l'invention est donc bonne. Sous l'effet d'une lumière naturelle, l'intensité de la variation de couleur du mélange liant synthétique/polymère est comparable pour les colorations jaune et verte.

En outre, ces émulsions permettent de préparer des revêtements colorés de faible épaisseur et ayant en particulier un point de ramollissement élevé.

## Revendications

1. Emulsion de bitume synthétique, utilisable notamment pour la réalisation de revêtements colorés, constituée essentiellement (a) de liants synthétiques exempts d'asphaltènes, et éventuellement (b) de pigments colorés, **caractérisée en ce qu'**elle comprend :
- au moins un liant synthétique, exempt d'asphaltènes, ayant un point de ramollissement ou une température Bille-Anneau (TBA), mesurée selon la norme NF T 66-008, comprise entre 30 et 100 °C, comprenant au moins un agent structurant à base de résine de pétrole et au moins un agent plastifiant à base d'un extrait aromatique d'une coupe pétrolière, ou comprenant au moins un agent structurant à base d'un polymère hydrocarboné cycloaliphatique et au moins un agent plastifiant à base d'un composé hydrocarboné aliphatique dont le nombre d'atomes de carbone est supérieur ou égal à 20,
- au moins un composé de la famille des latex de polymères acryliques et de caoutchoucs naturels ou synthétiques, introduit en une quantité comprise entre 3 et 40 % en poids de l'émulsion,
- de l'eau,
- et au moins un agent émulsifiant.

2. Emulsion selon la revendication 1, **caractérisée en ce que** le composé de la famille des latex est choisi parmi les polymères acryliques et les caoutchoucs naturels ou synthétiques, utilisables sous forme de dispersion aqueuse, choisis dans le groupe constitué par :
- l'EPDM (éthylène-propylène-diène-monomère),
- l'EPM (éthylène-propylène monomère),
- les copolymères styrène-butadiène statistiques S.B.R. (styrène-butadiène rubber) ou séquencés S.B.S. (styrène-butadiène-styrène), linéaires ou étoilés, ou S.I.S. (styrène-isoprène-styrène),
- le polyisobutylène,
- le polybutadiène,
- le polyisoprène,
- le polychloroprène.

3. Emulsion selon l'une des revendications 1 et 2, **caractérisée en ce que** le composé de la famille des latex de polymères acryliques et de caoutchoucs naturels ou synthétique est introduit en une quantité comprise entre 5 et 30 % en poids de l'émulsion.

4. Emulsion selon la revendication 1, **caractérisée en ce que** l'agent plastifiant est choisi dans le groupe constitué par :
- les huiles aliphatiques naturelles ou synthétiques,
- les polymères à bas degré de polymérisation, tels que les polyoléfines.

5. Emulsion selon la revendication 4, **caractérisée en ce que** les huiles aliphatiques ont un point d'aniline supérieur ou égal à 90°C (selon la méthode ASTM D 611) et, de préférence, supérieur ou égal à 110 °C.

6. Emulsion selon la revendication 4, **caractérisée en ce que** les huiles aliphatiques sont choisies parmi les huiles blanches hydrogénées, contenant au moins 60% d'atomes de carbone paraffinique (selon la méthode ASTM D 2140).

7. Emulsion selon la revendication 4, **caractérisée en ce que** les polymères constituant l'agent plastifiant ont un indice de viscosité (VI) (selon la méthode ASTM D 2270) supérieur ou égal à 100, et de préférence supérieur ou égal à 120.

8. Emulsion selon l'une des revendications 4 et 7, **caractérisée en ce que** les polymères sont du type polybutène, de masse moléculaire en nombre comprise entre 900 et 2600 et de viscosité cinématique à 100°C (selon la méthode ASTM D 445) comprise entre 200 et 4600 cSt (ou mm²/s).

9. Emulsion selon la revendication 1, **caractérisée en ce que** l'agent structurant est une résine thermoplastique polycycloaliphatique, en particulier du type des polycyclopentanes, à faible masse moléculaire.

10. Emulsion selon la revendication 9, **caractérisée en ce que** la résine thermoplastique du type des polycyclopentanes a un point de ramollissement (température Bille-Anneau) supérieur à 125 °C, et un indice de couleur Gardner (selon la norme NF T 20-030) d'au plus 1.

11. Emulsion selon la revendication 1, **caractérisée en ce que** le rapport en poids entre l'agent structurant et l'agent plastifiant est compris entre 0,4 et 1,5.

12. Emulsion selon l'une des revendications précédentes, **caractérisée en ce que** l'agent plastifiant est introduit en une quantité comprise entre 40 et 70 % en poids du liant synthétique exempt d'asphaltènes.

13. Emulsion selon l'une des revendications précédentes, **caractérisée en ce que** le liant synthétique exempt d'asphaltènes présente une pénétrabilité comprise entre 20 et 300 dixièmes de millimètre.

14. Emulsion selon l'une des revendications précédentes, **caractérisée en ce que** le liant synthétique exempt d'asphaltènes contient en outre soit des copolymères du type éthylène-acétate de vinyle (EVA) ou styrène-butadiène séquencés S.B.S, soit des polymères du type polyéthylène basse densité.

15. Emulsion selon l'une des revendications précédentes, **caractérisée en ce qu'**elle comprend :
- de 40 à 70 % en masse de liant synthétique, exempt d'asphaltène
- de 5 à 30 % en masse de latex de polymères acryliques et de caoutchoucs naturels ou synthétiques,
- de 60 à 30 % en masse d'eau,
- de 3 à 10 % en masse d'émulsifiant.

16. Procédé de préparation d'une émulsion selon l'une des revendications précédentes, **caractérisé en ce qu'**il comprend les étapes suivantes :
a) la réalisation d'un liant synthétique exempt d'asphaltènes, par mélange sensiblement homogène à l'état fondu d'au moins un agent plastifiant et d'au moins un agent structurant,
b) la mise en émulsion du liant synthétique obtenu en a) à l'aide d'une solution aqueuse d'un agent émulsifiant, en maintenant le mélange obtenu à une température suffisante pour obtenir une émulsion stable,
c) le refroidissement de l'émulsion et l'incorporation d'un latex de polymères acryliques et de caoutchoucs naturels ou synthétiques sous forme d'émulsion, sous agitation à température ambiante.

17. Procédé selon la revendication 16, **caractérisé en ce que** l'étape a) consiste à mélanger les composants du liant synthétique à une température comprise entre 180 et 200°C.

18. Procédé selon les revendications 16 et 17, **caractérisé en ce que** la deuxième étape b), comporte l'incorporation au liant synthétique, sous agitation, d'une solution émulsifiante réalisée avec un émulsifiant non ionique ou cationique, introduit à un taux compris entre 3 et 8 % en masse de la solution émulsifiante.

19. Procédé selon l'une des revendications 16 à 18, **caractérisé en ce que**, dans l'étape c), l'incorporation de l'émulsion de latex, en particulier non ionique ou cationique, est réalisée à un taux compris entre environ 15 et 30% en masse, à température ambiante.

20. Procédé selon l'une des revendications 16 à 19, **caractérisé en ce que** le liant synthétique exempt d'asphaltènes est obtenu par mélange d'un agent plastifiant se composant d'un composé hydrocarboné aliphatique, dont le nombre d'atomes de carbone est supérieur ou égal à 20, et d'un agent structurant composé d'un polymère hydrocarboné cycloaliphatique.

21. Application d'une émulsion selon l'une des revendications 1 à 15, à la réalisation d'un revêtement de surface coloré sur un matériau d'étanchéité, tel qu'une membrane ou chape, comprenant au moins une couche de base, **caractérisée en ce que** le dépôt du bitume synthétique, auquel sont ajoutés des pigments colorés, est obtenu par enduction de cette émulsion sur la couche de base et rupture de l'émulsion par évaporation de son eau. 24

22. Application selon la revendication 21, **caractérisée en ce que** la couche de revêtement de surface présente une température bille-anneau (TBA) supérieure à 160°C.

23. Application d'une émulsion selon l'une des revendications 1 à 15, à la réalisation d'un revêtement de surface coloré pour applications routières à froid, tel que des enduits superficiels, des enrobés coulés à froid, et des coulis, sur un support, **caractérisée en ce que** le dépôt du liant synthétique, auquel sont ajoutés des pigments colorés et des granulats, est obtenu par répandage à froid et rupture chimique de cette émulsion.

## Claims

1. A synthetic bitumen emulsion, usable in particular to produce coloured coatings, consisting substantially (a) of asphaltene-free synthetic binders and optionally (b) of coloured pigments, **characterised in that** it comprises:
- at least one synthetic, asphaltene-free binder, having a softening point or ring and ball temperature (TBA), measured according to standard NF T 66-008, of between 30 and 100°C, comprising at least one petroleum resin-based texturing agent and at least one plasticiser based on an aromatic extract of a petroleum fraction, or comprising at least one texturing agent based on a cycloaliphatic hydrocarbon polymer and at least one plasticiser based on an aliphatic hydrocarbon compound whose number of carbon atoms is greater than or equal to 20,
- at least one compound from the family of acrylic polymer and natural or synthetic rubber latexes, introduced in an amount of between 3 and 40% by weight of the emulsion,
- water,
- and at least one emulsifying agent.

2. An emulsion according to claim 1, **characterised in that** the compound from the latex family is selected from among acrylic polymers and natural or synthetic rubbers, usable in the form of an aqueous dispersion, selected from the group constituted by:
- EPDM (ethylene-propylene-diene monomer),
- EPM (ethylene-propylene monomer),
- random styrene-butadiene copolymers SBR(styrene-butadiene rubber) or linear or starred, block SBS (styrene-butadiene-styrene) copolymers or SIS (styrene-isoprene-styrene) copolymers
- polyisobutylene,
- polybutadiene,
- polyisoprene,
- polychloroprene.

3. An emulsion according to either one of claims 1 and 2, **characterised in that** the compound of the family of acrylic polymer and natural or synthetic rubber latexes is introduced in an amount of between 5 and 30% by weight of the emulsion.

4. An emulsion according to claim 1, **characterised in that** the plasticiser is selected from the group constituted by:
- natural or synthetic aliphatic oils,
- polymers exhibiting a low degree of polymerisation, such as polyolefins.

5. An emulsion according to claim 4, **characterised in that** the aliphatic oils have an aniline point greater than or equal to 90°C (according to the method of ASTM D 611), and preferably greater than or equal to 110°C.

6. An emulsion according to claim 4, **characterised in that** the aliphatic oils are selected from among hydrogenated white oils, containing at least 60% paraffinic carbon atoms (according to the method of ASTM D 2140).

7. An emulsion according to claim 4, **characterised in that** the polymers constituting the plasticiser have a viscosity index (VI) (according to the method of ASTM D 2270) greater than or equal to 100 and, preferably, greater than or equal to 120.

8. An emulsion according to either one of claims 4 and 7, **characterised in that** polymers are of the polybutene type, of a number average molecular weight of between 900 and 2600 and a kinematic viscosity at 100°C (according to the method of ASTM D 445) of between 200 and 4600 cSt (or mm²/s).

9. An emulsion according to claim 1, **characterised in that** the texturing agent is a polycycloaliphatic thermoplastic resin, in particular of the polycyclopentane type, of low molecular weight.

10. An emulsion according to claim 9, **characterised in that** the thermoplastic resin of the polycyclopentane type has a softening point (ring and ball temperature) greater than 125°C, and a Gardner colour value (according to standard NF T 20-030) of at most 1.

11. An emulsion according to claim 1, **characterised in that** the weight ratio between the texturing agent and the plasticiser is between 0.4 and 1.5.

12. An emulsion according to any one of the preceding claims, **characterised in that** the plasticiser is introduced in an amount of between 40 and 70% by weight of the asphaltene-free synthetic binder.

13. An emulsion according to any one of the preceding claims, **characterised in that** the asphaltene-free synthetic binder displays a penetrability of between 20 and 300 tenths of a millimetre.

14. An emulsion according to any one of the preceding claims, **characterised in that** the asphaltene-free synthetic binder further contains either copolymers of the ethylenevinyl acetate (EVA) or block SBS styrene-butadiene type or polymers of the low density polyethylene type.

15. An emulsion according to any one of the preceding claims, **characterised in that** it comprises:
- 40 to 70% by weight of asphaltene-free synthetic binder,
- 5 to 30% by weight of acrylic polymer and natural or synthetic rubber latex,
- 60 to 30% by weight of water
- 3 to 10% by weight of emulsifier.

16. A process for preparing an emulsion according to any one of the preceding claims, **characterised in that** it comprises the following stages:
a) production of an asphaltene-free synthetic binder by substantially homogeneous mixing, in the molten state, of at least one plasticiser and at least one texturing agent,
b) emulsifying the synthetic binder obtained under a) by means of an aqueous solution of an emulsifier, while keeping the mixture obtained at a temperature which is sufficient to obtain a stable emulsion,
c) cooling of the emulsion and incorporation of an acrylic polymer and natural or synthetic rubber latex in the form of an emulsion, with stirring at ambient temperature.

17. A process according to claim 16, **characterised in that** stage a) consists in mixing the components of the synthetic binder at a temperature of between 180 and 200°C.

18. A process according to claims 16 and 17, **characterised in that** the second stage b) comprises incorporation into the synthetic binder, with stirring, of an emulsifying solution produced with a non-ionic or cationic emulsifier introduced in an amount of between 3 and 8% by weight of the emulsifying solution.

19. A process according to any one of claims 16 to 18, **characterised in that**, in stage c), the latex emulsion, which is in particular non-ionic or cationic, is incorporated in an amount of between around 15 and 30% by weight, at ambient temperature.

20. A process according to any one of claims 16 to 19, **characterised in that** the asphaltene-free synthetic binder is obtained by mixing a plasticiser composed of an aliphatic hydrocarbon compound, whose number of carbon atoms is greater than or equal to 20, and a texturing agent composed of a cycloaliphatic hydrocarbon polymer.

21. Application of an emulsion according to any one of claims 1 to 15 to produce a coloured surface coating on a waterproofing material, such as a membrane or screed, comprising at least one base layer, **characterised in that** the synthetic bitumen, to which are added coloured pigments, is laid by applying a coating of said emulsion onto the base layer and breaking the emulsion by evaporating its water.

22. Application according to claim 21, **characterised in that** the surface coating layer exhibits a ring and ball temperature(TBA)greater than 160°C.

23. Application of an emulsion according to any one of claims 1 to 15 to produce a coloured surface coating for "cold" road-building applications, such as surface dressings, cold-applied paving mixes and slurry seals, on a substrate, **characterised in that** the synthetic binder, to which are added coloured pigments and pellets, is laid by cold-spreading and chemical breaking of said emulsion.

## Patentansprüche

1. Synthetische Bitumenemulsion, verwendbar insbesondere zur Herstellung von gefärbten Beschichtungen, die im Wesentlichen aus (a) synthetischen Bindemitteln ohne Asphaltene und gegebenenfalls (b) Farbpigmenten aufgebaut ist, **dadurch gekennzeichnet, daß** sie umfaßt:
- ohne Asphaltene mindestens ein synthetisches Bindemittel, das einen Erweichungspunkt bzw. eine Kugel/Ring (TBA)-Temperatur, gemessen nach der Norm NF T 66-008, von 30 bis 100°C aufweist, umfassend mindestens ein Strukturmittel auf der Grundlage von Petrolharz und mindestens einen Weichmacher auf der Basis eines aromatischen Extrakts eines Petrolverschnitts, oder umfassend mindestens ein Strukturmittel auf der Basis eines cycloaliphatischen Kohlenwasserstoffpolymers und mindestens einen Weichmacher auf der Basis einer aliphatischen Kohlenwasserstoffverbindung, deren Kohlenstoffatomzahl 20 oder höher ist,
- mindestens eine Verbindung aus der Klasse der Latexe von Acrylpolymeren und von natürlichen oder synthetischen Kautschuken, eingebracht in einer Menge von 3 bis 40 Gew.-% der Emulsion,
- Wasser
- und mindestens ein Emulgiermittel.

2. Emulsion gemäß Anspruch 1, **dadurch gekennzeichnet, daß** die Verbindung der Klasse der Latexe unter den Acrylpolymeren und den natürlichen oder synthetischen Kautschuken ausgewählt ist, die in Form wäßriger Dispersion verwendbar sind, ausgewählt aus der Gruppe, die besteht aus:
- EPDM (Ethylen/Propylen/Dien-Monomer)
- EPM (Ethylen/Propylen-Monomer)
- Copolymeren von Styrol/statistischem Butadien SBR (Styrol/Butadien-Gummi) oder Sequenz-SBS (Styrol/Butadien/Styrol), jeweils linear oder verzweigt, oder von SIS (Styrol/Isopren/Styrol),
- Polyisobutylen,
- Polybutadien,
- Polyisopren,
- Polychloropren.

3. Emulsion gemäß einem der Ansprüche 1 und 2, **dadurch gekennzeichnet, daß** die Verbindung der Klasse der Latexe von Acrylpolymeren und von natürlichen oder synthetischen Kautschuken in einer Menge von 5 bis 30 Gew.-% der Emulsion eingebracht ist.

4. Emulsion gemäß Anspruch 1, **dadurch gekennzeichnet, daß** der Weichmacher ausgewählt ist aus der Gruppe, die besteht aus:
- natürlichen oder synthetischen aliphatischen Ölen,
- Polymeren mit niedrigem Polymerisations-Grad, wie Polyolephinen.

5. Emulsion gemäß Anspruch 4, **dadurch gekennzeichnet, daß** die aliphatischen Öle einen Annilinpunkt von 90°C oder höher (gemäß der Methode ASTM D 611) und vorzugsweise von 110°C oder höher aufweisen.

6. Emulsion gemäß Anspruch 4, **dadurch gekennzeichnet, daß** die aliphatischen Öle ausgewählt sind aus hydrierten Weißölen, die mindestens 60% paraffinische Kohlenstoffatome (gemäß der Methode ASTM D 2140) enthalten.

7. Emulsion gemäß Anspruch 4, **dadurch gekennzeichnet, daß** die den Weichmacher aufbauenden Polymere einen Viskositätsindex (VI) (gemäß der Methode ASTM D 2270) von 100 oder mehr und vorzugsweise von 120 oder mehr aufweisen.

8. Emulsion gemäß einem der Ansprüche 4 bis 7, **dadurch gekennzeichnet, daß** die Polymere vom Polybutentyp, von einem zahlenmäßigen Molekulargewicht von 900 bis 2600 und von einer kinematischen Viskosität bei 100°C (gemäß der Methode ASTM D 445) von 200 bis 4600 cSt (oder mm²/s) sind.

9. Emulsion gemäß Anspruch 1, **dadurch gekennzeichnet, daß** das Strukturmittel ein polycycloaliphatisches thermoplastisches Harz ist, insbesondere vom Typ der Polycyclopentane, mit einem geringen Molekulargewicht.

10. Emulsion gemäß Anspruch 9, **dadurch gekennzeichnet, daß** das thermoplastische Harz vom Typ der Polycyclopentane einen Erweichungspunkt (Kugel/Ringtemperatur) von über 125 °C und einen Gardner-Farbindex (gemäß der Norm NF T 20-030) von höchstens 1 aufweist.

11. Emulsion gemäß Anspruch 1, **dadurch gekennzeichnet, daß** das Gewichtsverhältnis des Strukturmittels zu dem Weichmacher zwischen einschließlich 0,4 und 1,5 liegt.

12. Emulsion gemäß einem der vorangehenden Ansprüche, **dadurch gekennzeichnet, daß** der Weichmacher in einer Menge von 40 bis 70 Gew.% des synthetischen Bindemittels ohne Asphaltene eingeführt ist.

13. Emulsion gemäß einem der vorangehenden Ansprüche, **dadurch gekennzeichnet, daß** das synthetische Bindemittel ohne Asphaltene eine Durchdringbarkeit von 20 bis 300 Zehntel Millimeter zeigt.

14. Emulsion gemäß einem der vorangehenden Ansprüche, **dadurch gekennzeichnet, daß** das synthetische Bindemittel ohne Asphaltene außerdem entweder Ethylen/Vinylacetat-Copolymere (EVA) bzw. Styrol/Butadien-Sequenzen (SBS), oder Polyethylenpolymere niedriger Dichte enthält.

15. Emulsion gemäß einem der vorangehenden Ansprüche, **dadurch gekennzeichnet, daß** sie umfaßt:
- 40 bis 70 Masse-% synthetisches Bindemittel ohne Asphaltene,
- 5 bis 30 Masse-% Latex von Acrylpolymeren oder natürlichen oder synthetischen Kautschuken,
- 60 bis 30 Masse-% Wasser,
- 3 bis 10 Masse-% Emulgiermittel.

16. Verfahren zur Herstellung einer Emulsion gemäß einem der vorangehenden Ansprüche, **dadurch gekennzeichnet, daß** es folgende Schritte umfaßt:
a) Herstellung eines synthetischen Bindemittels ohne Asphaltene, durch im Wesentlichen homogene Vermengung, bei geschmolzenem Zustand, von mindestens einem Weichmacher und mindestens einem Strukturmittel,
b) in-Emulsion-bringen des in a) erhaltenen synthetischen Bindemittels mit Hilfe einer wäßrigen Lösung eines Emulgiermittels unter Halten der erhaltenen Vermengung bei einer Temperatur, die zum Erhalt einer stabilen Emulsion ausreicht,
c) Abkühlen der Emulsion und Einbringen eines Latex von Acrylpolymeren oder natürlichen oder synthetischen Kautschuken in Emulsionsform unter Bewegung bei Umgebungstemperatur.

17. Verfahren gemäß Anspruch 16, **dadurch gekennzeichnet, daß** der Schritt a) aus einer Vermengung der Bestandteile des synthetischen Bindemittels bei einer Temperatur von 180 bis 200°C besteht.

18. Verfahren gemäß den Ansprüchen 16 und 17, **dadurch gekennzeichnet, daß** der zweite Schritt b) das Einbringen, unter Bewegung in das synthetische Bindemittel, einer Emulgiermittellösung umfaßt, die mit einem nicht-ionischen oder kationischen Emulgiermittel hergestellt wurde, eingeführt bei einem Prozentsatz von 3 bis 8 Masse-% der Emulgiermittellösung.

19. Verfahren gemäß einem der Ansprüche 16 bis 18, **dadurch gekennzeichnet, daß** der Schritt c), das Einbringen der insbesondere nicht-ionischen oder kationischen Latex-Emulsion, bei einem Prozentsatz von ungefähr 15 bis 30 Masse-% bei Umgebungstemperatur ausgeführt wird.

20. Verfahren gemäß einem der Ansprüche 16 bis 19, **dadurch gekennzeichnet, daß** das synthetische Bindemittel ohne Asphaltene erhalten wurde durch Vermengung eines Weichmachers, der aus einer aliphatischen Kohlenwasserstoffverbindung, deren Kohlenstoffatomzahl 20 oder mehr ist, zusammengesetzt ist, und eines Strukturmittels, das aus einem cykcoaliphatischen Kohlenwasserstoffpolymer zusammengesetzt ist.

21. Verwendung einer Emulsion gemäß einem der Ansprüche 1 bis 15 zur Herstellung einer gefärbten Oberflächenbeschichtung auf einem Abdichtungs- bzw. Beschichtungsmaterial, wie einer Membran oder einer Isolierschicht, umfassend mindestens eine Grundierschicht, **dadurch gekennzeichnet, daß** der Niederschlag des synthetischen Bitumen, zu dem Farbpigmente hinzugefügt wurden, erhalten wurde durch Überziehen der Grundierschicht mit dieser Emulsion und Aufbrechen der Emulsion durch Verdampfen ihres Wassers.

22. Verwendung gemäß Anspruch 21, **dadurch gekennzeichnet, daß** die Oberflächenüberzugslage eine Kugel/Ring (TBA)-Temperatur von über 160°C zeigt.

23. Verwendung einer Emulsion gemäß einem der Ansprüche 1 bis 15 zur Herstellung eines gefärbten Oberflächenbezugs für Anwendungen im kalten Straßenbau, wie oberflächliche Verputze, bei Kälte gegossenen Straßendecken und Brei auf einer Unterlage, **dadurch gekennzeichnet, daß** der Niederschlag des synthetischen Bindemittels, zu dem Farbpigmente und Granulat hinzugefügt wurden, erhalten wurde durch Kaltplanieren und chemisches Aufbrechen dieser Emulsion.
